# EUROPEAN PATENT APPLICATION

(11) **EP 3 196 962 A1**
(43) Date of publication of application: **26.07.2017**
(21) Application number: 16753566.5
(22) Date of filing: 06.07.2016
(51) Int. Cl.: H01M 2/34, H04M 1/02, H01H 9/08

(54) **POWER-OFF DEVICE AND MOBILE PHONE**

(30) Priority: 09.12.2015 CN 201521014975 U
(71) Applicant: LE Holdings (Beijing) Co., Ltd., Beijing 100025 (CN); Lemobile Information Technology (Beijing) Co., Ltd., Beijing 101300 (CN)
(72) Inventor: Yu, Dan, Beijing 101300 (CN); TIAN, Dun, Beijing 101300 (CN); CAI, Shengmao, Beijing 101300 (CN); ZHANG, Fei, Beijing 101300 (CN); WANG, Hui, Beijing 101300 (CN)
(74) Representative: Zardi, Marco
(86) International application number: PCT/CN2016/088962
(87) International publication number: WO 2017/096856

(57) **Abstract**

Embodiments of the disclosure disclose a breaking apparatus and a mobile phone. The breaking apparatus includes: a power source PCB electrically connected with an anode and a cathode of a power source; a breaker electrically connected with the power source PCB, wherein the breaker is arranged with a feeding device comprising a first jack and a second jack, and if the first jack is connected with the second jack, then a power supply line of the power source PCB is cut off; and a short-circuit plug arranged with a first plug and a second plug, both of which are electrically connected. The mobile phone includes the breaking apparatus according to the embodiment of the invention. The invention is intended to address such a problem in the prior art that while the mobile phone is being assembled or repaired, a power button thereof may tend to be touched accidentally so that the mobile phone is short-circuited, thus burning elements thereof.

## Description

### CROSS REFERENCE TO RELATED APPLICATIONS

This application claims the benefit of Chinese Patent Application No. 201521014975.6, filed with the Chinese Patent Office on December 09, 2015 and entitled "Breaking apparatus and mobile phone", which is hereby incorporated by reference in its entirety.

### FIELD

The present disclosure relates to the field of portable devices, and particularly to a power breaking apparatus and a mobile phone.

### BACKGROUND

At present, more and more mobile phones are designed with un-removable batteries. However since the batteries of the mobile phones are not removable, the inventors of the disclosure have identified during making of the disclosure the following drawbacks in the existing mobile phones:

While the mobile phones are being assembled, if the batteries are connected with mother boards, then power-on buttons may tend to be touched accidentally while the mobile phones are being assembled on a pipeline so that the mobile phones may be short-circuited, thus damaging elements thereof. Alike power-on buttons may tend to be touched accidentally while the mobile phones are being repaired, thus damaging elements thereof.

### SUMMARY

Embodiments of the disclosure provide a power breaking apparatus and a mobile phone so as to address the problem in the prior art of damaging elements in the mobile phone as a result of a power-on button of the mobile phone tending to be touched accidentally.

In a first aspect, an embodiment of the disclosure provides a power breaking apparatus including:
a power source PCB electrically connected with an anode and a cathode of a power source (5);
a breaker electrically connected with the power source PCB, wherein the breaker is arranged with a feeding device including a first jack and a second jack, and when the first jack is connected with the second jack, a power supply line of the power source PCB is cut off; and
a short-circuit plug arranged with a first plug and a second plug, both of which are electrically connected.

In connection with the first aspect above, in a first possible implementation, the power source PCB is a flexible circuit board.

In connection with the first aspect above, in a second possible implementation, the feeding device includes a conductor, and the first jack and the second jack arranged on the conductor.

In connection with the second possible implementation of the first aspect above, in a third possible implementation, the conductor is structured like an elliptical sheet.

In connection with the first aspect above, in a fourth possible implementation, the first jack is a spring pin connector.

In connection with the fourth possible implementation of the first aspect above, in a fifth possible implementation, the second jack is a spring pin connector.

In connection with the fourth or fifth possible implementation of the first aspect above, in a sixth possible implementation, the short-circuit plug is made of a copper alloy or an aluminum alloy.

In a second aspect, an embodiment of the disclosure provides a mobile phone including the power breaking apparatus according to the embodiment of the disclosure in the first aspect.

With the power breaking apparatus according to the embodiment of the disclosure, before the mobile phone or another portable device is assembled on a pipeline, or is repaired, the power breaking apparatus is installed in position in advance. While the mobile phone or another portable device is being assembled or repaired, the short-circuit plug is inserted into the first jack and the second jack of the feeding device so that the first jack and the second jack of the feeding device are connected with each other, that is the power breaking apparatus is short-circuited, and at this time, the breaker is short-circuited, so that the power supply line of the power source PCB is cut off. In order to operate normally the mobile phone or another portable device, the short-circuit plug is pulled out, and the breaker is reset, so that the power supply line of the power source PCB can be resumed into operation, thus improving the operational convenience and safety of the mobile phone.

### BRIEF DESCRIPTION OF THE DRAWINGS

One or more embodiments are illustrated by way of example, and not by limitation, in the figures of the accompanying drawings, wherein elements having the same reference numeral designations represent like elements throughout. The drawings are not to scale, unless otherwise disclosed.
Fig.1 is a structural diagram of a power breaking apparatus according to an embodiment of the disclosure;
Fig.2 is a structural diagram of a short circuit plug according to an embodiment of the disclosure; and
Fig.3 is a structural diagram of a mobile phone according to an embodiment of the disclosure.

### DETAILED DESCRIPTION

In order to make the objects, technical solutions, and advantages of the embodiments of the disclosure more apparent, the technical solutions according to the embodiments of the disclosure will be described below clearly and fully with reference to the drawings in the embodiments of the disclosure, and apparently the embodiments described below are only a part but not all of the embodiments of the disclosure. Based upon the embodiments here of the disclosure, all the other embodiments which can occur to those skilled in the art without any inventive effort shall fall into the scope of the disclosure.

### First Embodiment

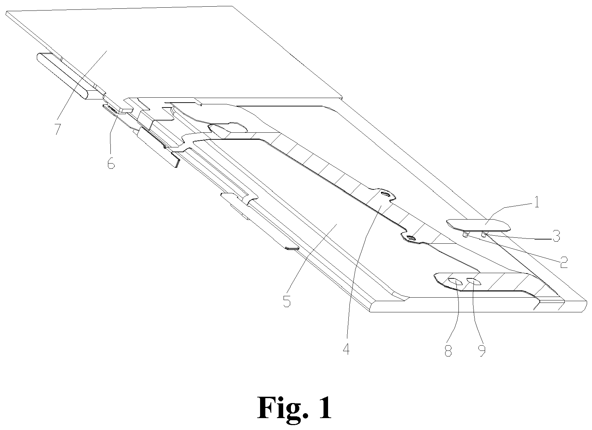

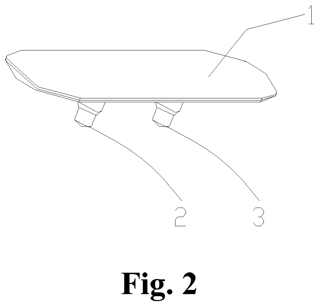

An embodiment of the disclosure provides a power breaking apparatus as illustrated in Fig.1 and Fig.2, where the apparatus includes a power source Printed Circuit Board (PCB) 4, a breaker, and a short-circuit plug 1. The power source PCB 4 is electrically connected with an anode and a cathode of a power source 5 to control a mobile phone to be powered, and the power source 5 to be charged and discharged. In a preferred implementation, the power source PCB 4 is a Flexible Circuit Board (FPB) to accommodate a low-weight and thin mobile phone. Moreover the flexible circuit board can have routing arranged flexibly as a function of the positions of elements in the mobile phone. The breaker is electrically connected with a mobile phone PCB 7, and particularly the breaker is arranged on a power supply line of the power source PCB 4 for the purpose of protective power breaking while the mobile phone is being assembled or repaired. Those skilled in the art can appreciate that the breaker is a breaker panel which can be arranged in the power source PCB 4 or the mobile phone PCB 7. Of course, the breaker can alternatively be a breaker in another form as long as the mobile phone can operate as required, and the embodiment of the disclosure will not be limited to any particular form thereof.

When the mobile phone is short-circuited, there will be large current passing so that a breaker switch is opened instantaneously to thereby protect the mobile phone. The breaker is arranged with a feeding device including a first jack 8 and a second jack 9. The short-circuit plug 1 is arranged to be electrically connected with a first plug 2 and a second plug 3. When the first jack 8 is connected with the second jack 9, then the feeding device will be short-circuited. At this time, the breaker is opened instantaneously when the mobile phone is powered on, so that the power supply line of the power source PCB 4 is broken.

While the mobile phone is being assembled or repaired, in order to prevent elements of the mobile phone from being damaged as a result of a power button being touched accidentally, firstly the first plug 2 and the second plug 3 of the short-circuit plug 1 are inserted respectively into the first jack 8 and the second jack 9 of the feeding device so that the first jack 8 is connected with the second jack 9. When the power button is touched accidentally, then the mobile phone PCB 7 will be powered on instantaneously, and since the first jack 8 is connected with the second jack 9, the power supply line is short-circuited so that the breaker is opened instantaneously to thereby avoid in effect the other elements from being damaged after the mobile phone is powered on. Since the breaker is opened, the mobile phone can not be powered even when the power button is touched accidentally. After the mobile phone is assembled or repaired, the short-circuit plug 1 is pulled out, and the breaker is reset, so that the mobile phone can be powered on normally.

In a preferred implementation of the disclosure, in order to accommodate a low-weight and thin mobile phone, and to facilitate a design of routing, the power source PCB 4 is a Flexible Circuit Board (FCB). The breaker panel is arranged on the FCB. Referring to Fig.2, the feeding device includes a conductor 11, the first plug 2, and the second plug 3. The first plug 2 and the second plug 3 are arranged on the conductor 11. Furthermore in order to facilitate installation thereof, the first plug 2 and the second plug 3 are perpendicular to the conductor 11. The distance between the first plug 2 and the second plug 3 is the same as the distance between the first jack 8 and the second jack 9 to thereby enable the short-circuit plug 1 to be engaged with the feeding device. The thickness of the FCB is smaller than that of a conventional PCB so that a smaller part of the space in the mobile phone may be occupied, and the FCB can be bent at some angle to thereby facilitate a design of routing in the mobile phone.

In order for convenient manufacturing, the conductor 11 is shaped like an elliptic sheet. Moreover the sheet-like structure can further accommodate a low-weight and thin mobile phone. Of course, the shape of the conductor 11 can be round, rectangular, triangular, or another shape as long as the mobile phone can be installed as required, and the embodiment of the disclosure will not be limited thereto. Optionally in order for convenient manufacturing, the material of the short-circuit plug 1 can be a copper alloy or an aluminum alloy. Of course, the conductor 11 can alternatively be made of another material as long as the first plug 2 can be connected with the second plug 3, and the embodiment of the disclosure will not be limited thereto.

In order to ensure the short-circuit plug 1 to be electrically connected with the feeding device reliably, the first plug 2 is embodied as a spring pin connector (pogopin). More preferably the second plug 3 is also embodied as a spring pin connector (pogopin). The spring pin connector (pogopin) can have the feeding device pressed more tightly to thereby ensure the first plug 8 to be connected with the second plug 9.

While the mobile phone is being assembled or repaired, in order to prevent the elements of the mobile phone from being damaged as a result of the power button being touched accidentally, firstly the two spring pin connectors (pogopin) of the short-circuit plug 1 are inserted into the first plug 8 and the second plug 9 of the feeding device so that the first plug 8 is connected with the second plug 9. When the power button is touched accidentally, then the mobile phone PCB 7 will be powered instantaneously, and since the first plug 8 is connected with the second plug 9, the power supply line will be short-circuited, and since there is large current passing, the breaker is opened instantaneously to thereby avoid in effect the other elements from being damaged after the mobile phone is powered on. Since the breaker is opened, the mobile phone cannot be powered even if the power button is touched accidentally. After the mobile phone is assembled or repaired, the short-circuit plug 1 is pulled out, and the breaker is reset, so that the mobile phone can be powered on normally. The power breaking apparatus is structured simply, and convenient to use.

### Second Embodiment

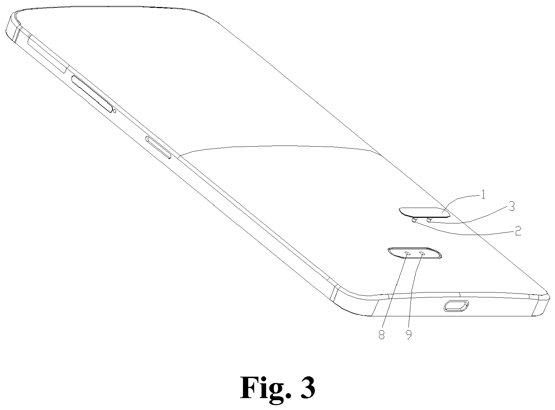

An embodiment of the disclosure further provides a mobile phone including the power breaking apparatus according to the first embodiment of the disclosure. Referring to Fig.1 and Fig.3, the mobile phone further includes a mobile phone PCB 7, a connecting device 6, and a power source 5. The connecting device 6 is configured to connect the mobile phone PCB board 7 with the power source PCB 4 to thereby power the mobile phone, and the breaker (not illustrated) can be installed on the mobile phone PCB board 7 or the power source PCB 4, where the feeding device of the breaker is electrically connected with the power source PCB 4. Routing of the power source PCB 4 can be arranged reasonably as a function of the positions of the elements in the mobile phone. Moreover the power source PCB 4 is further electrically connected with a power button of the mobile phone, and a USB socket of the mobile phone to thereby control the mobile phone to be supplied, and the power source 5 to be charged. In this embodiment, the feeding device is arranged at the lower end of the mobile phone. Of course, the feeding device can alternatively be positioned otherwise as required, and the embodiment of the disclosure will not be limited thereto.

While the mobile phone is being assembled or repaired, in order to prevent elements of the mobile phone from being damaged as a result of a power button being touched accidentally, firstly the first plug 2 and the second plug 3 of the short-circuit plug 1 are inserted respectively into the first jack 8 and the second jack 9 of the feeding device so that the first jack 8 is connected with the second jack 9. When the power button is touched accidentally, then the mobile phone PCB 7 will be powered on instantaneously, and since the first jack 8 is connected with the second jack 9, the power supply line is short-circuited so that the breaker is opened instantaneously to thereby avoid in effect the other elements from being damaged after the mobile phone is powered on. Since the breaker is opened, the mobile phone can not be powered even when the power button is touched accidentally. After the mobile phone is assembled or repaired, the short-circuit plug 1 is pulled out, and the breaker is reset, so that the mobile phone can be powered on normally.

Those ordinarily skilled in the art can appreciate that all or a part of the steps in the methods according to the embodiments described above can be performed by program instructing relevant hardware, where the programs can be stored in a computer readable storage medium, and the programs can perform one or a combination of the steps in the embodiments of the method upon being executed; and the storage medium includes an ROM, an RAM, a magnetic disc, an optical disk, or any other medium which can store program codes.

The embodiments of the apparatus described above are merely exemplary, where the units described as separate components may or may not be physically separate, and the components illustrated as elements may or may not be physical units, that is, they can be collocated or can be distributed onto a number of network elements. A part or all of the modules can be selected as needed in reality for the purpose of the solution according to the embodiments of the disclosure. This can be understood and practiced by those ordinarily skilled in the art without any inventive effort.

Lastly it shall be noted that the respective embodiments above are merely intended to illustrate but not to limit the technical solution of the disclosure; and although the disclosure has been described above in details with reference to the embodiments above, those ordinarily skilled in the art shall appreciate that they can modify the technical solution recited in the respective embodiments above or make equivalent substitutions to a part of the technical features thereof; and these modifications or substitutions to the corresponding technical solution shall also fall into the scope of the disclosure as claimed.

## Claims

1. A power breaking apparatus, comprising:
a power source PCB (4) electrically connected with an anode and a cathode of a power source (5);
a breaker electrically connected with the power source PCB (4), wherein the breaker is arranged with a feeding device comprising a first jack (8) and a second jack (9), and when the first jack (8) is connected with the second jack (9), then a power supply line of the power source PCB (4) is cut off; and
a short-circuit plug (1) arranged with a first plug (2) and a second plug (3), both of which are electrically connected.

2. The power breaking apparatus according to claim 1, wherein the power source PCB (4) is a flexible circuit board.

3. The power breaking apparatus according to claim 1, wherein the feeding device comprises a conductor (11), and the first jack (8) and the second jack (9) arranged on the conductor (11).

4. The power breaking apparatus according to claim 3, wherein the conductor (11) is structured like an elliptical sheet.

5. The power breaking apparatus according to claim 1, wherein the first jack (8) is a spring pin connector.

6. The power breaking apparatus according to claim 5, wherein the second jack (9) is a spring pin connector.

7. The power breaking apparatus according to claim 6, wherein the short-circuit plug (1) is made of a copper alloy or an aluminum alloy.

8. A mobile phone, comprising the power breaking apparatus according to any one of claims 1 to 7.
